# EUROPEAN PATENT SPECIFICATION

(11) **EP 0 429 417 B1**
(45) Date of publication and mention of the grant of the patent: **13.04.1994**
(21) Application number: 90830549.3
(22) Date of filing: 22.11.1990
(51) Int. Cl.: B23Q 16/00, B23Q 3/00, B29C 37/04, B23C 3/12

(54) **Equipment for the sequential positioning, machining and finishing of the corners of window and door frames fashioned in plastic material, at a lateral work station**
Vorrichtung zur stufenweisen Positionierung, Bearbeitung und Nachbehandlung von Ecken von aus Kunststoff hergestellten Fenster- oder Türrahmen in einer seitlich angeordneten Arbeitsstelle
Appareillage pour la conduite successive, à un poste de travail annexe, des opérations de mise en position, façonnage et traitement final des joints d'angle de châssis de fenêtre ou de porte en matière plastique

(30) Priority: 24.11.1989 IT 372389; 24.11.1989 IT 372589; 02.03.1990 IT 336990
(43) Date of publication of application: 29.05.1991
(73) Proprietor: UNIVAL S.R.L., I-47040 Villa Verucchio (Forli) (IT)
(72) Inventor: Pasquini, Luciano, I-47037 Rimini, (Forli) (IT)
(74) Representative: Lanzoni, Luciano

(56) References cited:
- EP-A- 0 320 624
- DE-A- 2 407 876
- DE-A- 3 447 113
- DE-U- 8 314 930
- DE-U- 8 630 317
- DE-U- 8 902 786
- US-A- 3 927 819

## Description

The present invention relates to equipment by which the corners of window and door frames fashioned in plastic material are positioned in sequence for machining and finishing at a lateral automatic work station, a primary function of such a station being to remove the beads of excess plastic material that remain after the corners have been welded. Such an equipment is known from DE-A-3 447 113.

The equipment disclosed is of the type comprising a system whereby frames are conveyed longitudinally and maintained in contact along one flank with a longitudinal entry fence that terminates in a first vertical stop coinciding with the beginning of the machining area of the lateral work station.

Similarly, the frames register longitudinally with at least the initial section of a second, or exit fence, departing from a second vertical stop that coincides with the end of the machining area of the work station. The two stops thus allow the entry of one corner of a frame, positioned at an angle to the machining area of the lateral work station, while checking its approach from either side; the frame itself is drawn into the machining area by a catch pin capable of vertical movement in either direction and of reciprocating horizontally across the longitudinal direction in which the frames are conveyed through the equipment, so as to interfere cyclically with the successive frames by hooking onto each corner offered in turn for finishing and directing it toward the machining area.

Conventional methods of manufacturing window and door fixtures in plastics include processes that permit of fabricating frames by welding together the relative rails and stiles, which are cut and joined at 45°.

Given that the weld is effected by a localized application of heat to the material at the ends of the frame members, followed by mutual compression of the joined ends, the corners of the frame emerge from assembly exhibiting characteristic beads of fused material that must be removed subsequently by machining.

The excess fused material is removed in a finishing step effected (together with other complementary machining operations) using equipment of the type in question, fitted with work stations consisting substantially in a plurality of tool units that are mounted to a bearing structure at various positions and angles in such a way as to engage the corners of a frame, arranged horizontally on a suitable table or bed, according to a prescribed sequence.

In conventional work stations, the tool units are all positioned on one side of the frame offered for machining.

Such conventional work stations are typified by a fundamental drawback, namely that the various tool units are positioned and orientated in space in such a manner as to execute a precise sequence of operations; thus, in order to execute a sequence of operations different from that prescribed, the need arises for adjustment to the physical components of the station.

Equipment of the type thus outlined comprises a longitudinal feed system necessarily of overhead design, so as to permit of interfering effectively with the members of the frame disposed at right angles to the longitudinal fences. Only in this way is conventional equipment of the type in question able to operate. To distance each machined corner from the work station, in fact, direct interference with one of the two respective converging members is essential, otherwise unwanted sliding movement may occur between the frame and conveyor system.

The overhead feed system comprises an interference mechanism capable of reciprocating movement both vertically, and horizontally in the feed direction of the frames.

More particularly, systems of this type normally comprise an interference mechanism positioned in such a manner as to carry two vertical locating elements, rigidly associated with the bottom of the mechanism itself and thus made to follow its every movement in both the horizontal direction and the vertical direction. Such interference mechanisms engage in frontal contact with the cross members of the plastic frames which, proceeding thus along the equipment longitudinally, must also be maintained flush with the fences afforded by the equipment, as aforementioned. As the locating elements are simply offered to the cross members of the frames however, it can happen that the frames themselves rotate during forward movement and thus are not maintained faultlessly flush with the longitudinal fences.

Furthermore, a system of this type is not suitable for smaller sizes of frames, being too large for the frame members to accommodate.

Such conventional equipment is also beset by the notable drawback that the pin referred to above, forming part of the work station, is the one and only component used in positioning the corners of the frames, causing them to rotate about a fulcrum coinciding with the aforementioned first vertical stop, which marks the beginning of the machining area of the work station. Thus, if the proportions of the frame happen to be distinctly weighted in the longitudinal dimension, a solitary pin can be subject to bending stresses ultimately having an adverse effect on its operation. Moreover, the use of the pin in question as a sole means of rotating the frame corners into the machining area of the lateral work station dictates that the longitudinal feed system must necessarily operate by direct interference and in two directions as mentioned, given that the interference mechanism needs to displace the frames sequentially from one side of the work station to the other, positioning them exactly in such a way as will enable the pin to bring about successive rotations of the frame and permit thus of machining the corresponding corners.

Accordingly, the object of the present invention is to overcome the drawbacks mentioned above.

The stated object is fully realized by an equipment according to claim 1. Dependent claims 2-12 concern preferred embodiments of the invention. This equipment is not affected in any way by problems of stresses imposed on single working parts, which permits of utilizing a simple longitudinal feed system, unidirectional systems included, and which features a work station such as permits of executing an extensive range of machining sequences using a given selection of tool units, without the need for any adjustment of the physical component parts of the station, operating on both faces of a frame at one and the same time; such a station affords considerable flexibility, being able to execute machining sequences that can be reprogrammed swiftly and simply without the need for adjustments to physical component parts, and a drastic reduction in the time typically required to set up toolage when changing over from one sequence to another, with consequent benefits from the cost standpoint.

In addition, with a preferred feed system according to the invention, notably simple in embodiment, any risk of the moving frame rotating or shifting from its prescribed path is totally eliminated, and the arrangement is wholly suitable for any typical size of fixture in general manufacture.

Such a system also affords the advantage that the movement produced is substantially conventional, and that one of its two locating elements is simply rendered capable of movement by suitable means to the end that the mechanism may positively restrain each frame rather than merely entering into contact with it. Moreover, the system is proportioned and positioned in such a way as ensures its usefulness for any size and type of frame.

Last, and by no means of least importance, the equipment is extremely simple and functional, given its level of performance.

The invention will now be described in detail, by way of example, with the aid of the accompanying drawings, in which:
- fig 1 shows one part of the equipment disclosed, illustrated in perspective and with certain parts omitted better to reveal others;
- fig 2 illustrates a sequence of steps a, b, c, d, e and f corresponding to the various stages in the operation of the equipment disclosed;
- fig 3 illustrates a work station according to the present invention, in its entirety, with certain parts omitted better to reveal others;
- fig 4 is a schematic side elevation of the work station of fig 3;
- fig 5 is an enlarged view showing the detail of certain features of the work station of fig 3;
- fig 6 is a side elevation of the system by which window and door frames are fed longitudinally along the equipment disclosed, in which the greater part of the equipment is omitted to the end of giving greater emphasis to the longitudinal feed system;
- fig 7 illustrates a part of the equipment in plan, and a section of the longitudinal feed system taken through II-II in fig 6.

With reference to the accompanying drawings, the equipment 1 disclosed comprises a feed system 10 by means of which window or door frames 3 fashioned in plastic material, supplied from a loading station, are conveyed longitudinally to a point level with a work station 2 designed essentially, though not exlusively, to remove beads 33 of excess material left by welding from each corner 30 of the frame 3.

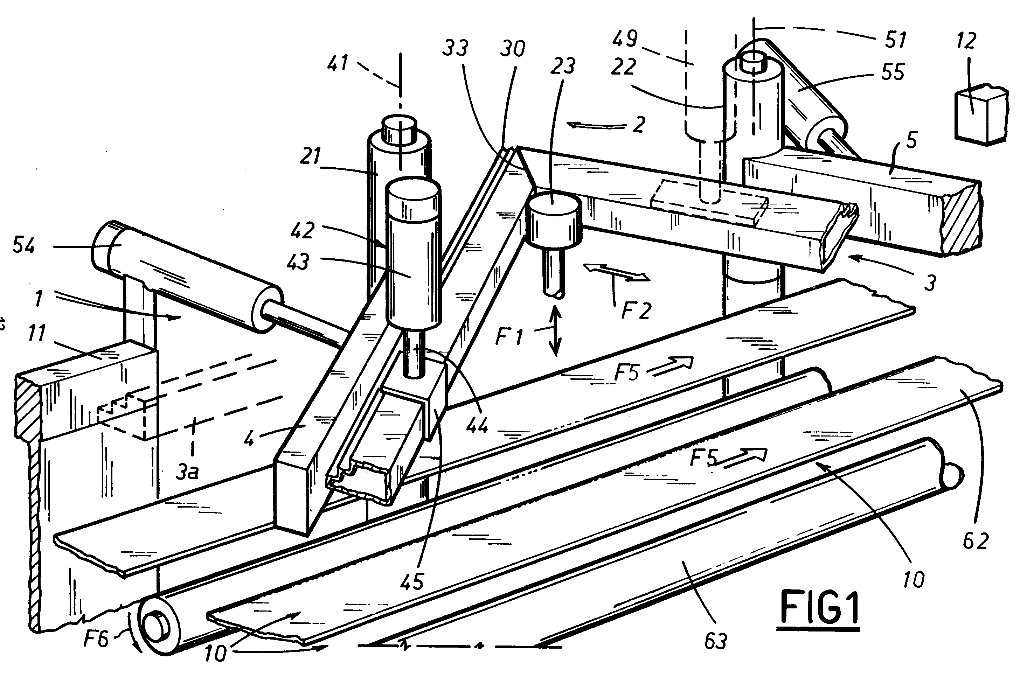

Such a station 2 is positioned to one side, in equipment of the type in question, the necessary opening lying between vertical stops 21 and 22, which in the case in point are embodied simply as vertical cylindrical elements that both guide the entry of the corner 30 of the frame to be machined and check its movement on each side. During the machining operation, the frames 3 are moved into a position angled in relation to the longitudinal direction, in such a way as permits of directing each corner into the opening of the lateral work station 2. The station is equipped with a pin 23 capable of vertical movement in the direction denoted F1, as well as reciprocating horizontally in the direction denoted F2 at right angles to the longitudinal direction in which the frames 3 are fed through the equipment 1. Vertical movement is rendered necessary by reason of the fact that the pin 23 must be raised and lowered, respectively, in order to register against each of the frames 3 from inside as discernible clearly in fig 1, and to recede from the dimensional compass of the frame 3 altogether, in certain conditions that will be made clear in due course. Transverse movement, on the other hand, is required clearly enough in order to position the pin 23 initially in the corner 30 of the frame 3, from the inside, prior to drawing the corner into the work station 2 at an angle, as will become clear in due course when the operation of other components combining to bring about this same situation is also described.

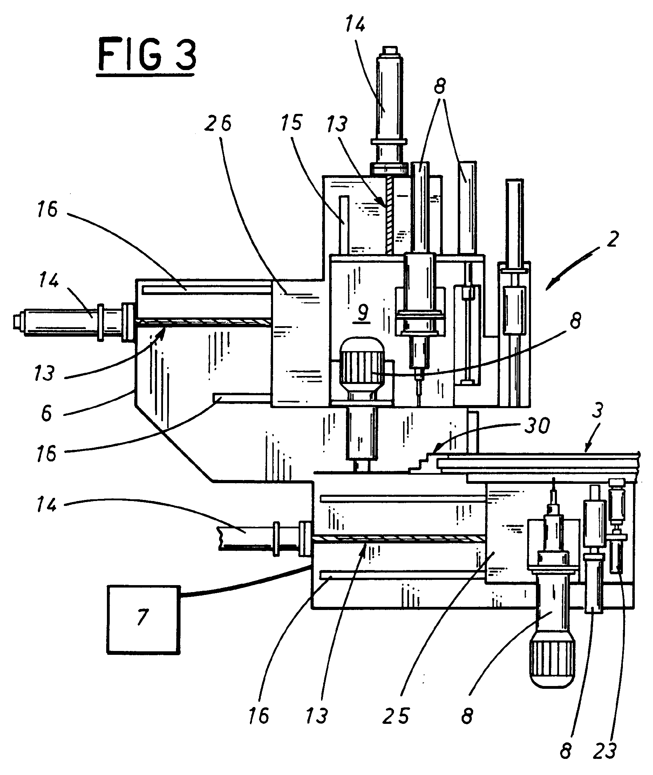

More exactly, and with reference to fig 3, the equipment will be seen to comprise a work station 2 for machining the corners 30 of window and door frames 3 fashioned in plastic material, consisting substantially in a pair of parallel, motorized machined heads 25 and 26 supported by a bearing structure 6 and capable of guided movement, the one head 26 above the frame 3 and the other head 25 beneath; the frame 3 is supported by a suitable table 17 and occupies a horizontal plane 31.

The bearing structure 6 is equipped with ways 16 by and along which the machine heads 25 and 26 are supported and capable of traversing horizontally, parallel to the plane 31 occupied by the frames 3.

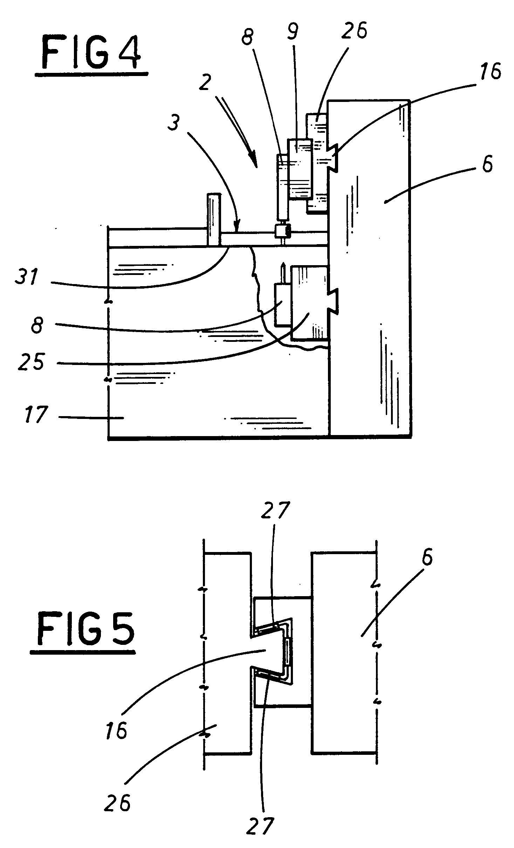

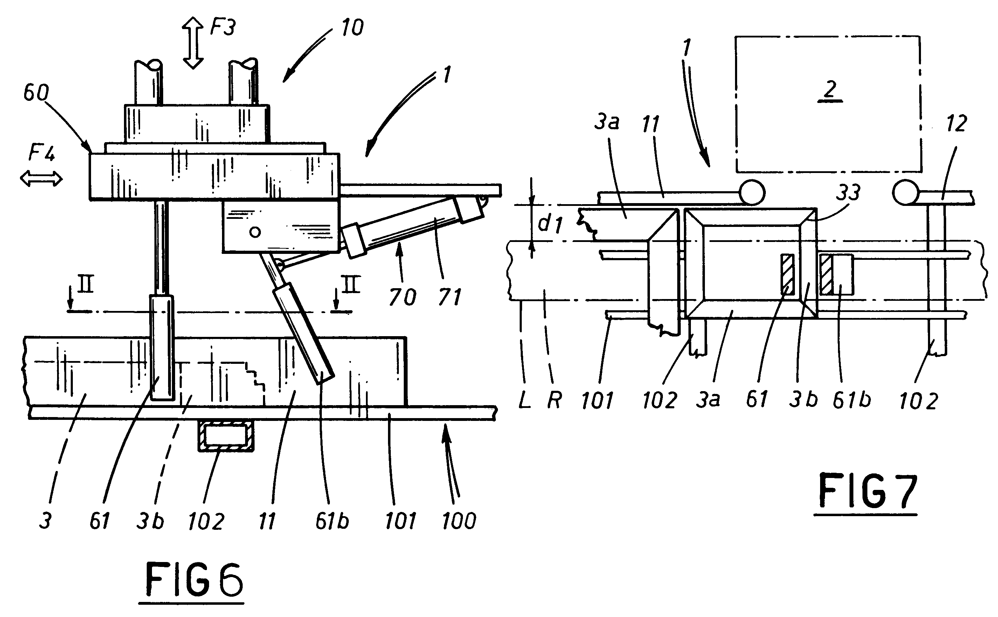

In a preferred embodiment, illustrated in figs 4 and 5, the horizontal ways 16 are of a type with rolling elements 27, whilst the movement of the heads 25 and 26 proper is generated by conventional mechanisms 13 of lead screw-and-nut embodiment driven by respective motors 14.

The machine head denoted 25, located beneath the frame 3 in fig 3, supports and guides a plurality of tool units 8 disposed parallel one with another and capable of traversing independently toward the frame 3 so as to perform the various machining operations for which they are specifically designed (e.g. drilling, surface finishing, or positioning operations as in the case of the pin 23).

In contrast to the head 25 positioned preferably below the frame 3, to which the corresponding tool units 8 are mounted direct, the tool units 8 of the top machine head 26, likewise capable of traversing individually in a direction normal to the plane 31 occupied by the frames, are mounted to a motorized slide 9 carried by the head on vertical ways 15.

Supported in this manner by the bearing structure 6, the motorized slide 9 is capable of traversing in a direction normal to the plane 31 occupied by a frame 3 currently being machined.

Likewise in a preferred embodiment, the slide 9 will be set in motion by a lead screw-and-nut type mechanism 13 driven by a respective motor 14.

Similarly, for preference, the vertical ways 15 incorporate rolling elements.

The work station 2 also comprises programmable control means 7, preferably numerical, by which the movement of the machine heads 25 and 26 and the relative tool units 8 is suitably synchronized and governed. For example, by piloting the horizontal traverse of the machine head 26 uppermost and the vertical traverse of its motorized slide 9, such programmable means 7 enable a given tool unit 8 to describe a selected and previously programmed trajectory within a plane normal to the plane 31 occupied by the frame 3, so that a simple variation of the machining program allows weldment beads of differing size and shape to be removed from the frame corners 30.

The equipment 1 is provided further with a first longitudinal entry fence 11, terminating at the first vertical stop 21, and a second longitudinal exit fence 12 departing from the second vertical stop 22. The longitudinal feed system 10 will keep the frames 3 flush against these same longitudinal fences 11 and 12 during their progress along the feed path. A feed system 10 preferred for this same purpose is shown in figs 6 and 7, and would be used in conjunction with equipment 1 having a plain feed table 100, for example consisting in longitudinal rails 101 and transverse supports 102.

The system 10 in question is of the type comprising an overhead interference mechanism 60 suspended above the table 100 along which the frames 3 are conveyed. The interference mechanism 60 is capable thus of vertical movement in either direction F3, and likewise of horizontal movement F4 back and forth along the direction followed by the frames 3.

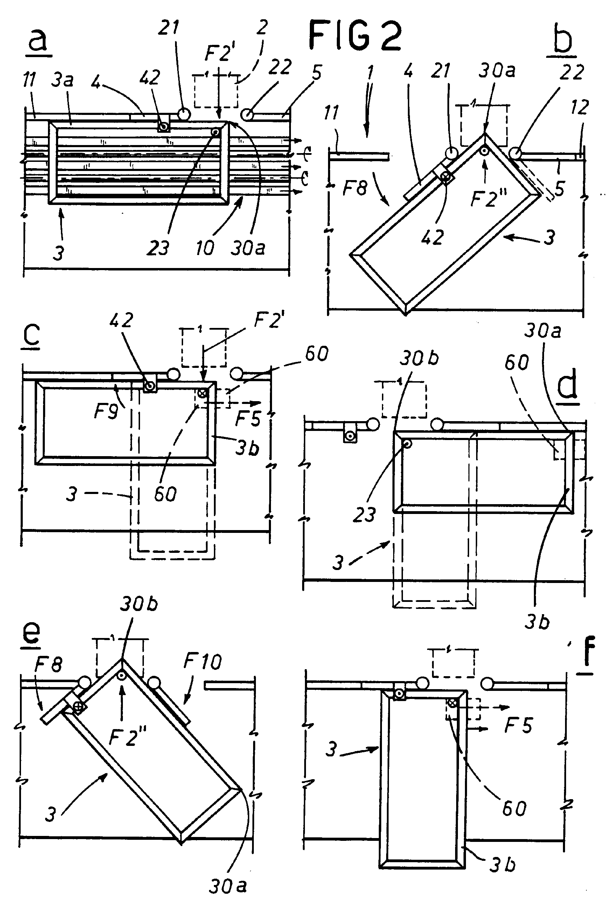

To advantage, the feed system 10 comprises a first locating element 61 vertically disposed and rigidly associated with the interference mechanism 60, and a second locating element 61b capable of movement between a first, at-rest position, shown in fig 6, and a second position, facing the first element, whereby a cross member 3b of the single frame 3 is restrained from either side (see fig 7 and figs 2c, 2d and 2f). Means 70 will therefore be provided by which to bring about the movement of the second locating element 61b, consisting in a simple fluid power cylinder 71 in the example illustrated, which are designed to apply the restraint in conjunction with the element 61 facing, synchronously with the operating steps of the longitudinal equipment 1 as a whole. It will be seen also that the dimensions of the locating elements 61 and 61b, to advantage, are kept strictly within a longitudinal band R that is separated from the longitudinal fences 11 and 12 by a distance d1 greater than or equal to a maximum transverse dimension of the longitudinal member 3a of a frame 3 of larger dimensions (shown in fig 7), and compassed on the side opposite by a boundary L located at a distance from the fences 11 and 12 less than or equal to the position occupied by the farthest longitudinal member 3a' of a frame 3 of smaller dimensions. Thus, the system 10 is sure to operate with equal efficiency on any given frame, regardless of size.

The operation of such a mechanism 60 is plain to see, and requires no detailed explanation.

Advantageously, equipment according to the present invention is able to operate with a longitudinal feed system 10 of less sophisticated embodiment; a unidirectional, transversely biased type of system as shown in fig 1, for example, is sufficient for the purpose in hand. Such a system 10 comprises conveyor belts 62 that turn in one direction only, denoted F5, and rollers 63 that rotate continuously in the direction denoted F6. The sufficiency of the unidirectional motion will be demonstrated in due course.

A special feature of the equipment disclosed, which allows the use of a conventional feed system 10 and is free from the drawbacks described at the outset, consists in the fact that the terminal section of the first longitudinal fence 11 and an initial section equal in length of the second longitudinal fence 12 are embodied as two respective straight bars 4 and 5 rotatable about corresponding vertical axes 41 and 51, preferably coinciding with the axes of the vertical stops 21 and 22. The bars 4 and 5 are capable of movement at different moments, as will become clear in due course, from a first limit position of alignment with the fences 11 and 12 to a second limit position, rotated to an angle of 45° anticlockwise, in the case of the one bar 4, and clockwise in the case of the other bar 5. One only of the two bars 4 and 5, for example that denoted 4 in the drawings, is also provided with restraining means 42 by which the member of the frame currently positioned against the fence is caused to rotate as one with the bar 4 in both directions. Moreover, it is preferred that the frame member in question be allowed to slide longitudinally in relation to the bar so as to adapt in the best manner possible, when diverted from its position of freely advancing motion in the longitudinal direction, to the angled position in which its corners 30 are machined, as will become clear in due course when the operation of the equipment will be described.

Given, in practice, that the straight bars 4 and 5 are rotated through an unvarying angle during the course of operation, such movement can be brought about to advantage by means of corresponding fluid power cylinders 54 and 55.

As regards restraining means 42, these are embodied to best advantage as a simple hold-down clamp 43 associated permanently with the bar 4, of which the rod 44 carries an interference element 45. Such an element will be preferably of L profile, as shown in fig 1, such that the clamp 43 can be operated in two distinct vertical positions: a first, with the interference element 45 registering only against the inside face of the frame member 3a (which thus remains free to slide longitudinally), and a second in which both the inside face and the top face are engaged, in such a way that the frame 3 will be held secure by the clamp 43 during the machining operation effected on the corners 30.

At all events, the equipment might also incorporate a further clamp 49, mounted to the second vertical stop 22 for example, serving to secure the frame 3 when the relative corner 30 is being machined. In this instance, needless to say, the clamp 43 first mentioned could be operated with the interference element 45 assuming one vertical working position only.

The operation of the equipment disclosed appears abundantly clear from fig 2, which illustrates the different steps and the movements of the various component parts characteristic of the invention.

In steps a, b, c, d, e and f of fig 2, the position of those parts invested with vertical movement is denoted by a dot (=) when raised and by a cross (x) when lowered.

Fig 2a shows a frame 3 that has been conveyed by the transversely biased feed system 10 to a point level with the work station 2 and positioned exactly in such a way that the pin 23, traversing across in the direction denoted F2', can engage a first corner 30a. Clearly, when moving in the direction denoted F2', the pin 23 will be in the lowered position denoted by the arrow F1 (fig 1), and raised thereafter on arrival at the position of fig 2a, as illustrated. The restraining means 42 associated with the bar 4 will be in the raised position, naturally enough, thus allowing passage of the frame 3. The instant the situation of fig 2a has occurred, the restraining means 42 are lowered, the interference element 45 remaining initially in the partly raised position in such a way that the frame 3 is able to settle into the angled position of fig 2b as the bar 4 rotates in the direction denoted F8 from its longitudinally aligned position to an angle of 45°. At the same time, the pin 23 retracts to its former position, traversing toward the work station 2 in the direction denoted F2''.

Thus, the frame 3 will be positioned correctly, regardless of its overall dimensions, given that the force contributed by the bar 4 is sufficient to relieve the pin 23 of any stress-related mechanical overload.

Once this first corner 30a has been machined in the work station 2, the bar 4 rotates in the direction denoted F9 to regain its position of longitudinal alignment (see fig 2c), straightening the frame 3 from the angled position and freeing the restrained member 3a. As the bar 4 is rotated, the pin 23 will again traverse forward, underneath the frame 3, in the direction denoted F2'. In this situation, the frame is entirely free to proceed in the direction denoted F5 toward the exact position of fig 2d, at which stage the configuration is essentially as in fig 2a but with the frame shifted toward the exit, such that the pin 23 can engage the corner 30b at the end opposite to the previous corner 30a and on the same side, as will be clear from fig 2d.

Now, the second bar 5 will rotate in the direction denoted F10 with the pin 23 again being caused to retract, in such a way as to position the frame 3 correctly at an angle and thus permit of machining the second corner 30b (fig 2e). The first bar 4 also contributes to this step by rotating once again in the direction denoted F8 toward the angled position, whereupon the restraining means 42 will operate. With this corner 30b also machined, the bars 4 and 5 again return to the longitudinally aligned position whilst the pin 23 extends from the machining area of the word station 2; at this point the situation will be similar to that indicated by the phantom line of fig 2c, whereupon the cycle of figs 2d, 2e and 2f is repeated until all the four corners of the frame have been machined.

This accomplished, the frame 3 will be transferred to an exit station and ejected, vacating the table for a successive frame 3.

During the various machining steps effected on each successive corner, the restraining means 42 will be made to descend to the vertical position in which the frame 3 is fully clamped, except in the event that the equipment is fitted with a second clamp 49 as illustrated in fig 1.

Whatever the ultimate embodiment, the sequence of steps thus described clearly reflects an operating procedure that is based on the notion of utilizing just one straight bar 4, rotatable through a given angle between two limit positions and equipped with means 42 such as will restrain one member of a frame 3 while allowing it to slide freely, at least when necessary.

## Claims

1. Equipment for positioning the corners of plastic window and door frames in sequence, to be machined and finished at a lateral station serving primarily to remove beads of excess fused material from each corner automatically, of the type that comprises a longitudinal feed system (10) by which frames (3) lying in a horizontal plane are conveyed in a longitudinal direction and held in flush contact along one flank at least with a first entry fence (11), longitudinally disposed and terminating at a first vertical stop (21) marking the beginning of the machining area of the work station (2), and with at least the initial section of a second exit fence (12) longitudinally disposed and departing from a second vertical stop (22) that marks the end of the machining area of the work station (2), wherein the stops (21, 22) serve to accommodate the entry of the corners (30) of the frame (3) when offered at an angle to the machining area of the work station (2) while checking the corresponding entry movement from either side, and the frames are positioned at the work station by a pin (23) capable of vertical movement in either direction and of reciprocating horizontally through a path transverse to the longitudinal direction in which the frames are fed through the equipment (1), in such a way as to engage the frame (3) cyclically by interfering with the relative corner (30) to be machined and drawing it into the machining area, characterized
- in that a terminal section of the longitudinally disposed first fence (11) and an initial section of the longitudinally disposed second fence (12) are embodied as two respective straight bars (4, 5) rotatable about relative vertical axes (41, 51) coinciding respectively with the first and second vertical stops (21, 22), and capable of movement both together and independently between a position of alignment with the first and second fences (11, 12) and an angled limit position in which each bar (4, 5) is rotated through 45° from the position of alignment and two adjacent corresponding members of a frame (3) are restrained at the same angle;
- in that it also comprises restraining means (42) associated with one only of the two bars (4, 5), by which the frame (3) is straightened from the angled position, in which a given corner (30) is machined, to resume a position such as enable its motion in the longitudinal direction, in such a way that each frame (3) is manoeuvred, sequentially and by means of the longitudinal feed system (10), from a first position in which the pin (23) interferes with and engages a first corner (30), passing through an intermediate position in which the frame (3) is disposed at an angle to enable machining of the first corner (30), to a second position in which the pin (23) engages a second corner (30) opposite from the first on the same side; and
- in that transverse movement of the pin (23) is coordinated with the rotational movements transmitted by the bars (4, 5) to each frame (3).

2. Equipment as in claim 1, wherein the longitudinal feed system (10) is unidirectional.

3. Equipment as in claim 1, wherein each straight bar (4, 5) is rotatably associated with the respective vertical stop (21, 22) in direct manner.

4. Equipment as in claim 1, wherein restraining means (42) consist in a hold-down clamp (43) permanently associated with the bar (4), of which the rod (44) carries an interference element (45) registering at least with the innermost face of the member of a frame (3) offered to the bar.

5. Equipment as in claim 3, wherein each bar (4, 5) is caused to rotate by means of a corresponding fluid power cylinder (54, 55).

6. Equipment as in claim 4, wherein the interference element (45) of the hold-down clamp (43) is able to occupy a first, more elevated working position in which the interference element (45) registers exclusively with the innermost face of the member of a frame (3) offered to the bar, and a second, lower working position in which the interference element (45) impinges firmly on the uppermost face of the same member of the frame (3).

7. Equipment as in claim 1, comprising at least one clamp (49) associated with one of the two vertical stops (21, 22), designed to secure each frame (3) while one of its corners (30) is machined.

8. Equipment as in claim 1, wherein the lateral work station (2) comprises:
- a pair of motorized machine heads (25, 26) mounted to parallel ways (16) associated with a bearing structure (6), occupying respective positions on opposite sides of a plane (31) occupied by the frame (3) to be machined, and traversed by drive means (13) in relation to the bearing structure (5) through a direction parallel with the plane (31) occupied by the frame (3);
- a plurality of tool units (8) associated with each of the machine heads (25, 26), disposed adjacent, parallel one with another and capable of traversing guided in a direction normal to the plane (31) occupied by the frame (3);
- programmable control means (7) enabling timed coordination of the movement of the machine heads (25, 26) and the tool units (8).

9. Equipment as in claim 8, wherein the tool units (8) are able to traverse independently of one another in a direction normal to the plane (31) occupied by the frame (3).

10. Equipment as in claim 8, wherein at least one machine head (26) of the pair carries a motorized slide (9) interconnecting the head and the relative plurality of tool units (8) and able to traverse in a direction normal to the plane (31) occupied by the frame (3).

11. Equipment as in claim 1, wherein the longitudinal feed system (10) is of the type consisting in an overhead interference mechanism (60) capable of vertical movement in either direction (F3) and of horizontal movement in either direction (F4) along the path followed by the frames (3), and comprises a first locating element (61) rigidly associated with the interference mechanism (60) and vertically disposed, a second locating element (61b) capable of movement from an at-rest position to an active position, facing the first element (61), whereby a cross member (3b) of each frame (3) is restrained from either side by the two locating elements, and means (70) by which to bring about the movement of the second locating element (61b) in such a way that application of the restraint is coordinated with the operating steps of the equipment (1).

12. Equipment as in claim 11, wherein the transverse dimension of the locating elements (61, 61b) is contained within a longitudinal band (R) separated on the one side from the longitudinal fences (11, 12) by a distance (d1) greater than or equal to the maximum transverse dimension of the longitudinal member (3a) of a relatively large size frame (3), and compassed on the side opposite by a boundary (L) located at a distance from the longitudinal fences (11, 12), less than or equal to that of the farthest longitudinal member (3a') of a relatively small size frame (3), in such a way that the longitudinal feed system (10) is able to operate with equal efficiency on frames (3) of any given size.

## Patentansprüche

1. Anlage zur aufeinanderfolgenden Positionierung der Ecken von Kunststoff-Fenster- und Türrahmen zur Bearbeitung und Fertigstellung in einer seitlichen Station, die vorwiegend dazu dient, automatisch von jeder Ecke Raupen von überschüssig geschmolzenem Material zu entfernen, vom Typ enthaltend ein längsverlaufendes Zuführsystem (10), durch welches die auf einer horizontalen Ebene liegenden Rahmen (3) in einer Längsrichtung geleitet und entlang einer Seite in bündigem Kontakt mit wenigstens einer ersten Eintrittsbegrenzung (11) gehalten werden, welche längsverlaufend angeordnet ist und an einem ersten vertikalen Anschlag (21) endet, der den Anfang des Bearbeitungsberiches der Arbeitsstation (2) markiert, sowie mit wenigstens einem Anfängsabschnitt einer zweiten Austrittsbegrenzung (12), die längsverlaufend angeordnet ist und von einem zweiten vertikalen Anschlag (22) ausgeht, der das Ende des Bearbeitungsbereiches der Arbeitsstation (2) markiert, wobei die Anschläge (21, 22) dazu dienen, den Eintritt der Ecken (30) des Rahmens (3) zu führen, wenn diese sich in einem Winkel in dem Bearbeitungsbereich der Arbeitsstation (2) zeigen, während die entsprechende Eintrittbewegung von jeder Seite kontrolliert wird, und wobei die Rahmen in der Arbeitsstation durch einen Zapfen (23) positioniert werden, der eine vertikale Bewegung in beiden Richtungen ausführen kann sowie eine wechselweise horizotale Bewegung durch eine querverlaufende Bahn zu der Längsrichtung, in welcher die Rahmen durch die Anlage (1) zugeführt werden, und zwar auf solche Weise, dass der Rahmen (3) zyklisch durch das Auftreffen der betreffenden zu bearbeitenden Ecke (30) gegriffen und in den Bearbeitungsbereich gezogen wird,
**dadurch gekennzeichnet,** dass
- ein Endabschnitt der längsverlaufend angeordneten ersten Eintrittsbegrenzung (11) und ein Anfangsabschnitt der längsverlaufend angeordneten zweiten Austrittsbegrenzung (12) als zwei jeweils geradlinige Leisten (4, 5) ausgebildet sind, drehbar um entsprechende vertikale Achsen (41, 51) und jeweils mit den ersten und zweiten vertikalen Anschlägen (21, 22) übereintimmend, und die in der Lage sind, zusammen und auch unabhängig eine Bewegung zwischen einer Position der Ausrichtung zu den ersten und zweiten Eintritts- und Austrittsbegrenzungen (11, 12) und einer gewinkelten Grenzposition auszuführen, in welcher jede Leiste (4, 5) um 45° im Verhältnis zu der Position des Ausrichtens gedreht ist und zwei angrenzende entsprechende Teile eines Rahmens (3) in dem gleichen Winkel gehalten werden;
- ebenfalls Haltemittel (42) vorgesehen sind, einer der beiden Leisten zugeordnet (4,5), durch welche der Rahmen (3) aus der angewinkelten Position, in welcher eine bestimmte Ecke (30) bearbeitet wird, bis zur Einnahme einer Position, in welcher dessen Bewegung in Längsrichtung möglich ist, gehalten wird, und zwar auf solche Weise, dass jeder Rahmen (3) aufeinanderfolgend und durch die Mittel eines längsverlaufenden Zuführsystems (10) aus einer ersten Position, in welcher der Zapfen (23) auf eine erste Ecke (30) trifft und diese hält, durch eine Zwischenposition, in welcher der Rahmen (3) im Winkel angeordnet ist und die Bearbeitung der ersten Ecke (30) möglich macht, in eine zweite Position, in welcher der Zapfen (23) auf eine zweite Ecke (30), entgegengesetzt zu der ersten und auf der gleichen Seite, trifft und diese hält, gehandhabt wird; und dass
- die Querbewegung des Zapfens (23) mit den Drehbewegungen koordiniert ist, die von den Leisten (4, 5) auf jeden Rahmen (3) übertragen werden.

2. Anlage nach Patentanspruch 1, **dadurch gekennzeichnet,** dass das längsverlaufende Zuführsystem (10) in einer Richtung arbeitet.

3. Anlage nach Patentanspruch 1, **dadurch gekennzeichnet,** dass jede geradlinige Leiste (4, 5) auf direkte Weise dem jeweiligen vertikalen Anschlag (21, 22) zugeordnet drehbar ist.

4. Anlage nach Patentanspruch 1, **dadurch gekennzeichnet,** dass die Haltemittel (42) aus einem Druckelement (43) bestehen, das ständig mit der Leiste (4) verbunden ist, und dessen Schaft (44) ein Greifelement (45) trägt, welches wenigstens an der Innenfläche des der Leiste dargebotenen Rahmens (3) anliegt.

5. Anlage nach Patentanspruch 3, **dadurch gekennzeichnet,** dass jede Leiste (4, 5) durch die Wirkung von entsprechenden strömungsdynamischen Antriebszylindern (54, 55) gedreht wird.

6. Anlage nach Patentanspruch 4, **dadurch gekennzeichnet,** dass das Greifelement (45) des Druckelementes (43) in der Lage ist, eine erste, höherliegende Arbeitsposition einzunehmen, in welcher das Greifelement (45) ausschliesslich die innenliegende Fläche des Teiles eines Rahmens (3) hält, sowie eine zweite, tieferliegende Arbeitsposition, in welcher das Greifelement (45) auf die obere Oberfläche desselben Teiles eines Rahmens (3) drückt.

7. Anlage nach Patentanspruch 1, **dadurch gekennzeichnet,** dass sie wenigstens ein Druckelement (49) enthält, das einem der beiden vertikalen Anschläge (21, 22) zugeordnet ist und dazu dient, einen jeden Rahmen (3) fest zu sichern, während eine seiner Ecken (30) bearbeitet wird.

8. Anlage nach Patentanspruch 1, **dadurch gekennzeichnet,** dass die seitliche Arbeitsstation (2) wie folgt enthält:
- ein Paar von angetriebenen Arbeitsköpfen (25, 26), die auf parallelen Führungen (16) montiert und mit einer Trägerstruktur (6) verbunden sind, so dass sie entsprechende Positionen an den gegenüberliegenden Seiten einer Ebene (31) einnehmen, die von dem zu bearbeitenden Rahmen (3) belegt ist, und die im Verhältnis zu der Trägerstruktur (6) durch Antriebsmittel (13) quer verschiebbar sind, und zwar in einer Richtung parallel zu der Ebene (31), die von dem Rahmen (3) belegt ist;
- eine Anzahl von Werkzeugeinheiten (8), die einem jeden Arbeitskopf (25, 26) zugeordnet sind, angeordnet parallel zueinander und aneinandergrenzend und in der Lage, sich geführt in einer Richtung rechtwinklig zu der Ebene (31) zu bewegen, die von dem Rahmen (3) belegt ist;
- programmierbare Steuermittel (7), die eine taktmässige Koordinierung der Bewegung der Arbeitsköpfe (25, 26) und der Werkzeugeinheiten (8) ermöglichen.

9. Anlage nach Patentanspruch 8, **dadurch gekennzeichnet,** dass die Werkzeugeinheiten (8) in der Lage sind, unabhängig voneinander sich in einer Richtung rechtwinklig zu der Ebene (31) zu bewegen, die von dem Rahmen (3) belegt ist.

10. Anlage nach Patentanspruch 8, **dadurch gekennzeichnet,** dass wenigstens ein Arbeitskopf (26) des Paares einen angetriebenen Schlitten (9), der den Kopf und die entsprechende Anzahl von Werkzeugeinheiten (8) miteinander verbindet und in der Lage ist, sich in einer Richtung rechtwinklig zu der Ebene (31) zu verschieben, die von dem Rahmen (3) belegt wird.

11. Anlage nach Patentanspruch 1, **dadurch gekennzeichnet,** dass das längsverlaufende Zuführsystem (10) von einem Typ ist, der aus einem obenliegenden Greifmechanismus (60) besteht, in der Lage, eine vertikale Verschiebung in beiden Richtungen (F3) auszuführen sowie eine horizontale Verschiebung in beiden Richtungen (F4) entlang der von den Rahmen (3) zurückgelegten Bahn, und der ein erstes Anschlagelement (61) enthält, das starr mit dem Greifmechanismus (60) verbunden und vertikal angeordnet ist, sowie ein zweites Anschlagelement (61b), das eine Verschiebung aus einer Ruhestellung in eine dem ersten Element (61) zugewandte Arbeitsposition ausführen kann, in welcher ein Querteil (3b) eines jeden Rahmens (3) von beiden Seiten durch die beiden Anschlagelemente gehalten wird, wobei Mittel (70) vorgesehen sind, durch welche das zweite Anschlagelement (61b) auf solche Weise bewegt wird, dass die Anwendung der Haltewirkung mit den Arbeitsschritten der Anlage (1) koordiniert wird.

12. Anlage nach Patentanspruch 11, **dadurch gekennzeichnet,** dass die Querabmessungen der Anschlagelemente (61, 61 b) innerhalb einer Längsbahn (R) gehalten sind, die auf der einen Seite von den längsverlaufenden Eintritts- und Austrittsbegrenzungen (11, 12) durch einen Abstand (d1) getrennt ist, der grösser als oder gleich ist wie die maximalen Querabmessungen des Längselementes (3a) eines verhältnismässig grossformatigen Rahmens (3), und die auf der entgegengesetzten Seite durch eine Trennungslinie (L) abgegrenzt ist, angeordnet mit einem Abstand von den längsverlaufenden Eintritts- und Austrittsbegrenzungen (11, 12), der geringer als oder gleich ist wie der des am entferntesten liegenden Längselementes (3a') eines verhältnismässig kleinformatigen Rahmens (3), und zwar auf solche Weise, dass das längsverlaufende Zuführsystem (10) in der Lage ist, stets gleich wirksam mit Rahmens (3) aller gegebenen Grössen zu arbeiten.

## Revendications

1. Appareillage pour la conduite successive, à un poste de travail annexé, des opérations de mise en position, façonnage et traitement final des joints d'angle de châssis de fenêtre et de porte en matière plastique, ces opérations servant principalement à enlever automatiquement le cordon de soudure de chaque joint d'angle, l'appareillage étant du type comprenant un système d'alimentation longitudinale (10) par lequel les châssis (3) disposés dans un plan horizontal sont transportés dans une direction longitudinale et maintenus en contact, le long d'un côté au moins, avec une première paroi d'entrée (11), disposée longitudinalement et se terminant à une première butée verticale (21) définissant le début de la zone de façonnage du poste de travail, et avec au moins la portion initiale d'une deuxième paroi de sortie (12) disposée longitudinalement et partant d'une deuxième butée verticale (22) définissant la fin de la zone de façonnage du poste de travail (2), où les butées (21, 22) servent à faciliter l'entrée des joints d'angle (30) du châssis (3) qui est présenté incliné à la zone de façonnage du poste de travail (2) et à contrôler en même temps le correspondant mouvement d'entrée aux deux côtés, et les châssis sont mis en position au poste de travail par une cheville (23) susceptible de mouvement vertical dans les deux sens et pourvue de mouvement horizontal en va-et-vient à travers un trajet transversal à la direction longitudinale selon laquelle les châssis sont alimentés à travers l'appareillage (1), de telle sorte que cette cheville engage le châssis (3) de manière cyclique par son interférence avec le correspondant joint d'angle (30) à façonner et entraîne ledit châssis dans la zone de façonnage, caractérisé:
- en ce qu'une portion terminale de la première paroi (11) disposée longitudinalement et une portion initiale de la deuxième paroi (12) disposée longitudinalement sont concrétisées par deux respectives barres rectilignes (4, 5) tournant autour de respectifs axes verticaux (41, 51) coïncidant respectivement avec les première et deuxièmes butées (21, 22) verticales et susceptibles de mouvement soit ensemble soit l'une indépendante de l'autre, entre une position d'alignement avec les première et deuxième parois (11, 12) et une position limite inclinée dans laquelle chaque barre (4, 5) est tournée de 45° à partir de la position d'alignement et deux éléments attenants correspondants d'un châssis (3) sont retenus suivant la même inclinaison;
- en ce qu'il comporte également des moyens de retenue (42) associés à l'une seulement des deux barres (4, 5), par lesquels le châssis (3) est redressé de la position inclinée à laquelle un joint d'angle (30) donné est façonné, pour qu'il puisse reprendre une position susceptible de permettre son mouvement dans la direction longitudinale, de telle sorte que chaque châssis (3) est manoeuvré en succession et au moyen du système d'alimentation longitudinal (10) d'une première position dans laquelle la cheville (23) interfère avec et engage un premier joint d'angle (30) passant par une position intermédiaire dans laquelle le châssis (3) est disposé incliné pour permettre le façonnage du premier joint d'angle (30), à une deuxième position dans laquelle la cheville (23) engage un deuxième joint d'angle (30) opposé au premier sur le même côté; et
- en ce que le mouvement transversal de la cheville (23) et les mouvements de rotation transmis par les barres (4, 5) à chaque châssis (3) sont coordonnés.

2. Appareillage selon la revendication 1, caractérisé en ce que le système d'alimentation longitudinal (10) est unidirectionnel.

3. Appareillage selon la revendication 1, caractérisé en ce que chaque barre rectiligne (4, 5) est directement associée en rotation à la respective butée verticale (21, 22).

4. Appareillage selon la revendication 1, caractérisé en ce que les moyens de retenue (42) comportent un élément presseur (43) associé en permanence à la barre (4), dont la tige (44) porte un élément d'interférence (45) coïncidant au moins avec la face interne de l'élément d'un châssis (3) présenté à la barre.

5. Appareillage selon la revendication 3, caractérisé en ce que chaque barre (4, 5) est amenée à tourner au moyen d'un correspondant cylindre fluidodynamique (54, 55).

6. Appareillage selon la revendication 4, caractérisé en ce que l'élément d'interférence (45) de l'élément presseur (43) est susceptible d'occuper une première position de travail, plus élevée, dans laquelle l'élément d'interférence (43) coïncide exclusivement avec la face interne de l'élément d'un châssis (3) présenté à la barre, et une deuxième position de travail, plus basse, dans laquelle l'élément d'interférence (45) exerce une pression stable contre la surface supérieure du même élément du châssis (3).

7. Appareillage selon la revendication 1, caractérisé en ce qu'il comporte au moins un élément de blocage (49) associé à une des deux butées verticales (21, 22), destiné à fixer chaque châssis (3) pendant que l'un de ses joints d'angle (30) est façonné.

8. Appareillage selon la revendication 1, caractérisé en ce que le poste de travail annexé (2) comporte:
- une paire de têtes de travail (25, 26) entraînées par un moteur, montées sur des éléments de guidage parallèles (16) associés à une structure de support (6), occupant des positions respectives sur les côtés opposés d'un plan (31) de disposition du châssis à façonner, et susceptibles de déplacement par des moyens d'actionnement (13) par rapport à la structure de support (5) suivant une direction parallèle au plan de disposition du châssis (3);
- une pluralité d'unités de travail ou outils (8) associés à chacune desdites têtes (25, 26), disposés attenants, parallèles les uns aux autres et susceptibles de déplacement, de manière guidée, dans une direction normale au plan (31) de disposition du châssis (3);
- des moyens de commande programmables (7) destinés à coordonner en synchronisme le mouvement des têtes de travail (25, 26) et par conséquent des outils (8).

9. Appareillage selon la revendication 8, caractérisé en ce que les outils (8) sont capables de se déplacer indépendamment les uns des autres dans une direction perpendiculaire au plan de disposition (31) du châssis (3).

10. Appareillage selon la revendication 8, caractérisé en ce qu'au moins une tête de travail (26) de ladite paire de têtes (25, 26) porte un chariot (9) reliant la tête et la respective pluralité d'outils (8) et susceptible de se déplacer dans une direction perpendiculaire au plan de disposition (31) du châssis (3).

11. Appareillage selon la revendication 1, caractérisé en ce que le système d'alimentation longitudinale (10) est du type se composant d'un mécanisme d'interférence suspendu (69) susceptible de mouvement vertical dans les deux sens (F3) et de mouvement horizontal dans les deux sens (F4), le long du trajet suivi par les châssis (3), et il comporte un premier élément de repérage (61) associé rigidement au mécanisme d'interférence (60) et disposé verticalement, un deuxième élément de repérage (61b) susceptible de mouvement d'une position de repos à une position de travail, en regard du premier élément de repérage (61), de sorte qu'une traverse (3b) de chaque châssis (3) est retenue des deux côtés par les deux éléments de repérage, et des moyens (70) par lesquels on cause le mouvement du deuxième élément de repérage (61b) de telle façon que l'action de retenue et les étapes de travail de l'appareillage (1) sont coordonnées.

12. Appareillage selon la revendication 11, caractérisé en ce que les dimensions transversales des éléments de repérage (61, 61b) sont contenues à l'intérieur d'une bande longitudinale (R) qui d'un côté est séparée des parois longitudinales (11, 12) d'une distance (d1) supérieure ou égale à la dimension transversale maximum du montant ou élément longitudinal (3a) d'un châssis (3) de dimensions relativement larges, et du côté opposé est entourée d'une ligne de bornage (L) éloignée des parois longitudinales (11, 12) d'une distance inférieure ou égale à celle du montant plus extérieur (3a') d'un châssis de dimensions relativement petites, de telle sorte que le système d'alimentation longitudinale (10) est en mesure d'opérer de manière également efficace sur des châssis (3) de n'importe quelle dimension.
